# EUROPEAN PATENT APPLICATION

(11) **EP 2 224 736 A1**
(43) Date of publication of application: **01.09.2010**
(21) Application number: 09011538.7
(22) Date of filing: 09.09.2009
(51) Int. Cl.: H04N 5/782

(54) **Program recording apparatus and recording schedule information display method**

(30) Priority: 25.02.2009 JP 2009042551
(71) Applicant: Kabushiki Kaisha Toshiba, Minato-ku Tokyo (JP)
(72) Inventor: Kuwahara, Kazuki, Tokyo (JP)
(74) Representative: HOFFMANN EITLE

(57) **Abstract**

A program recording apparatus includes: a registering module configured to register, in a recording schedule list, at least one of first recording schedule information and second recording schedule information; a display information output module configured to output display information for displaying a first recording schedule state that an additional recording schedule can be set in a recording time slot of the first recording schedule information and a second recording schedule state that no additional recording schedule can be set in a recording time slot of the second recording schedule information; a plurality of tuning module configured to tune in to signals transmitted from broadcasting stations; and a recording module configured to record one or more programs based on one or plural programs selected by one or plural ones of the plural tuning module by referring to the recording schedule list.

## Description

### CROSS REFERENCE TO RELATED APPLICATION(S)

The present disclosure relates to the subject matters contained in Japanese Patent Application No. 2009-042551 filed on February 25, 2009, which are incorporated herein by reference in its entirety.

### FIELD

The present invention relates to a program recording apparatus for recording programs according to recording schedule information and a method for displaying recording schedule information.

### BACKGROUND

Recorders have been widely used which record programs on a storage medium such as DVDs and HDDs. And recorders which incorporate plural tuners and hence can simultaneously record plural programs have been introduced into the market. Furthermore, digital TV broadcast receiving apparatus capable of recording programs have appeared in recent years. Such digital TV broadcast receiving apparatus record programs in a built-in HDD or an external HDD.

The above-described recorders output display information for display of an electronic program guide (EPG), register pieces of recording schedule information of selected programs in a recording schedule list according to recording program selecting operations made by the user, and perform recording by referring to the recording schedule list. The above-described digital TV broadcast receiving apparatus display an EPG, register pieces of recording schedule information of selected programs in a recording schedule list according to recording program selecting operations of the user, and perform recording by referring to the recording schedule list.

As for the above-described recorders capable of simultaneous recording, the number of programs that can be recorded simultaneously has a limit because the number of tuners that can be incorporated is limited. For example, assume a recording apparatus which incorporates one terrestrial analog broadcast tuner and two terrestrial digital broadcast tuners. For example, this recording apparatus can record up to two terrestrial digital broadcast programs simultaneously, that is, in the same time slot and can record one terrestrial analog broadcast program and one terrestrial digital broadcast program (two programs in total) simultaneously, that is, in the same time slot. However, this recording apparatus cannot record two terrestrial analog broadcast programs simultaneously, that is, in the same time slot.

Therefore, the user is required to know the tuner configuration of the recording apparatus and to care about what types of programs can be recorded simultaneously, that is, in the same time slot, and what types of programs cannot. The user may be confused if he or she is not familiar with recording apparatus.

In view of the above, a technique has been developed in which pieces of registered schedule information and the number of usable tuners and/or the number of possible concurrent-recording schedules of each time slot that are determined based on the pieces of registered schedule information are mapped with EPG information. An example of such technique is disclosed in JP-A-2007-110559. Another technique is disclosed in which recording schedule bars indicating presence/absence of a recording schedule are displayed in recording schedule bar display regions in respective time slots according to a reservation situation. An example of such technique is disclosed in JP-A-2004-228849.

The techniques disclosed in the publications, JP-A-2007-110559 and JP-A-2004-228849, allow the user to recognize a simultaneous recording schedule situation relatively easily.

However, recording apparatus which are high in extendibility have appeared recently. Such recording apparatus which are high in extendibility can record programs in not only a built-in HDD but also an external HDD or the like. In this case, the external HDD or the like may not accommodate simultaneous recording of plural programs even if the built-in HDD does.

For example, if an external HDD (which is not capable of simultaneous recording) is designated as a recording destination, while a program is being recorded in the external HDD, another program cannot be recorded simultaneously in the same external HDD or even the built-in HDD (which is capable of simultaneous recording).

Neither of the publications, JP-A-2007-110559 and JP-A-2004-228849, discloses a technique for informing, in an easy-to-understand manner, the user of a recording schedule situation that reflects such a recording destination designation condition. That is, neither discloses a technique for informing, in an easy-to-understand manner, the user that no further recording schedule can be made in a time slot in which a recording apparatus that is not capable of simultaneous recording is chosen.

### SUMMARY

One of objects of the present invention is to provide a program recording apparatus and a recording schedule information display method capable of informing, in an easy-to-understand manner, the user whether a further recording schedule can be made in a recording environment in which a recording device that is capable of simultaneous recording and a recording device that is not capable of simultaneous recording can be used selectively.

According to an aspect of the present invention, there is provided a program recording apparatus including: a registering module configured to register, in a recording schedule list, at least one of first recording schedule information including first recording destination information indicating that a first program storage unit that is capable of simultaneous recording of plural programs is designated as a recording destination and second recording schedule information including second recording destination information indicating that a second program storage unit that is not capable of simultaneous recording of plural programs is designated as a recording destination; a display information output module configured to output display information for displaying a first recording schedule state that an additional recording schedule can be set in a recording time slot of the first recording schedule information and a second recording schedule state that no additional recording schedule can be set in a recording time slot of the second recording schedule information; a plurality of tuning module configured to tune in to signals transmitted from broadcasting stations; and a recording module configured to record one or more programs based on one or plural programs selected by one or plural ones of the plural tuning module by referring to the recording schedule list.

According to another aspect of the present invention, there is provided a method for displaying recording schedule information, the method including: registering, in a recording schedule list, at least one of first recording schedule information including first recording destination information indicating that a first program storage unit that is capable of simultaneous recording of plural programs is designated as a recording destination and second recording schedule information including second recording destination information indicating that a second program storage unit that is not capable of simultaneous recording of plural programs is designated as a recording destination; and outputting display information for display of a first recording schedule state that an additional recording schedule can be set in a recording time slot of the first recording schedule information and a second recording schedule state that no additional recording schedule can be set in a recording time slot of the second recording schedule information.

### BRIEF DESCRIPTION OF THE DRAWINGS

A general configuration that implements the various feature of the invention will be described with reference to the drawings. The drawings and the associated descriptions are provided to illustrate embodiments of the invention and not to limit the scope of the invention.
Fig. 1 is a block diagram showing a general configuration of a digital TV broadcast receiving apparatus (program recording apparatus) according to an embodiment of the present invention.
Fig. 2 is a flowchart of a recording schedule process including cancellation of recording schedule information which is executed in the digital TV broadcast receiving apparatus.
Fig. 3 shows an example manner of display of a program guide in the digital TV broadcast receiving apparatus.
Fig. 4 shows an example manner of display of recording schedule bars in a program guide in the digital TV broadcast receiving apparatus.
Fig. 5 shows another example manner of display of recording schedule bars in a program guide in the digital TV broadcast receiving apparatus.
Fig. 6 shows still another example manner of display of recording schedule bars in a program guide in the digital TV broadcast receiving apparatus.
Fig. 7 shows yet another example manner of display of recording schedule bars in a program guide in the digital TV broadcast receiving apparatus.
Fig. 8 shows a further example manner of display of recording schedule bars in a program guide in the digital TV broadcast receiving apparatus.
Fig. 9 shows an example manner of display in the digital TV broadcast receiving apparatus in which recording schedule information of a program whose recording is about to be reserved and pieces of simultaneous recording schedule information of programs are displayed in a separated manner.
Fig. 10 shows an example manner of display in the digital TV broadcast receiving apparatus indicating that the program whose recording is about to be reserved would become recordable if cancellation candidates were canceled.
Fig. 11 is for description of extraction of a minimum number of cancellation candidates and shows an example relationship between reservation bars that are already set and a recording schedule bar corresponding to a program whose recording is about to be reserved.
Fig. 12 is for description of extraction of a minimum number of cancellation candidates and shows another example relationship between reservation bars that are already set and a recording schedule bar corresponding to a program whose recording is about to be reserved.
Fig. 13 is for description of extraction of a minimum number of cancellation candidates and shows yet another example relationship between reservation bars that are already set and a recording schedule bar corresponding to a program whose recording is about to be reserved.
Fig. 14 is for description of extraction of a minimum number of cancellation candidates and shows a further example relationship between reservation bars that are already set and a recording schedule bar corresponding to a program whose recording is about to be reserved.

### DETAILED DESCRIPTION OF THE EMBODIMENTS

An embodiment of the present invention will be hereinafter described with reference to the drawings.

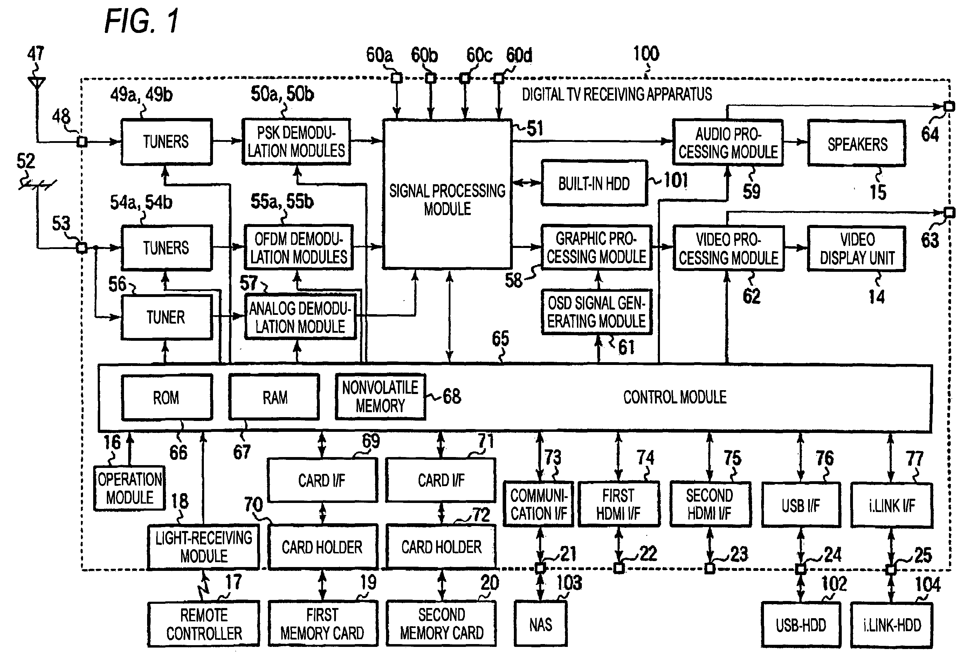

Fig. 1 is a block diagram showing a general configuration of a digital TV broadcast receiving apparatus (program recording apparatus) according to an embodiment of the present invention. Although the embodiment is directed to recording schedule of a digital TV broadcast receiving apparatus, the recording schedule that will be described in the embodiment can also be applied to such recording apparatus as an HDD recorder and a DVD recorder. Whereas the digital TV broadcast receiving apparatus is equipped with a video display unit for displaying an EPG, recording schedule information, etc., the HDD recorder and the DVD recorder are equipped with a display information output module for outputting display information to be used for displaying an EPG and recording schedule information on a display device. The recording schedule that will be described in the embodiment can be applied to the HDD recorder and the DVD recorder if the video display unit of the digital TV broadcast receiving apparatus is replaced by the display information output module.

Fig. 1 shows a main signal processing system of the digital TV broadcast receiving apparatus 100. A satellite digital TV broadcast signal received by a BS/CS digital broadcast receiving antenna 47 is supplied to satellite digital broadcast tuners 49a and 49b via an input terminal 48, whereby broadcast signals on desired channels are selected. Equipped with the two satellite digital broadcast tuners 49a and 49b, the digital TV broadcast receiving apparatus 100 can simultaneously tune in to satellite broadcast signals on a maximum of two channels. Although the embodiment is directed to the case that the digital TV broadcast receiving apparatus 100 is equipped with two satellite digital broadcast tuners, three or more satellite digital broadcast tuners may be provided.

The broadcast signals selected by the tuners 49a and 49b are supplied to PSK (phase shift keying) demodulation modules 50a and 50b, where each of them is demodulated into a digital video signal and audio signal, which are output to a signal processing module 51.

A terrestrial digital TV broadcast signal received by a terrestrial broadcast receiving antenna 52 is supplied to terrestrial digital broadcast tuners 54a and 54b via an input terminal 53, whereby broadcast signals on desired channels are selected. Equipped with the two terrestrial digital broadcast tuners 54a and 54b, the digital TV broadcast receiving apparatus 100 can simultaneously tune in to terrestrial digital broadcast signals on a maximum of two channels. Although the embodiment is directed to the case that the digital TV broadcast receiving apparatus 100 is equipped with two terrestrial digital broadcast tuners, three or more terrestrial digital broadcast tuners may be provided.

The broadcast signals selected by the tuners 54a and 54b are supplied to an OFDM (orthogonal frequency division multiplexing) demodulation module 55, where each of them is demodulated into a digital video signal and audio signal, which are output to the signal processing module 51.

A terrestrial analog TV broadcast signal received by the terrestrial broadcast receiving antenna 52 is supplied to a terrestrial analog broadcast tuner 56, whereby a broadcast signal on a desired channel is selected. The broadcast signal selected by the tuner 56 is supplied to an analog demodulation module 57, where it is demodulated into an analog video signal and audio signal, which are output to the signal processing module 51.

The signal processing module 51 performs prescribed digital signal processing selectively on the digital video signals and audio signals supplied from the PSK modulation module 50 and the OFDM demodulation module 55, and outputs the resulting signals to a graphic processing module 58 and an audio processing module 59.

Plural (in the illustrated example, four) input terminals 60a, 60b, 60c, and 60d are connected to the signal processing module 51. Each of the input terminals 60a-60d enables input of an analog video signal and audio signal from outside the digital TV broadcast receiving apparatus 100.

The signal processing module 51 selectively digitizes the analog video signals and audio signals supplied from the analog demodulation module 57 and the input terminals 60a-60d, performs prescribed digital signal processing on the resulting digital video signal and audio signal, and outputs the resulting signals to the graphic processing module 58 and the audio processing module 59.

The graphic processing module 58 has a function of superimposing an OSD (on-screen display) signal generated by an OSD signal generating module 61 on the digital video signal that is supplied form the signal processing module 51. The graphic processing module 58 can selectively output the output video signal of the signal processing module 51 and the output OSD signal of the OSD signal generating module 61 or a signal in which the two output signals are combined so as to correspond to the respective halves of a screen.

The digital video signal that is output from the graphic processing module 58 is supplied to a video processing module 62. The video signal as processed by the video processing module 62 is supplied to a video display unit 14 and an output terminal 63. The video display unit 14 displays video based on the received video signal. If an external device is connected to the output terminal 63, the video signal that is supplied to the output terminal 63 is input to the external device.

The audio processing module 59 converts the received digital audio signal into an analog audio signal having such a format as to be reproducible by speakers 15. The analog audio signal is output to the speakers 15 and reproduced as sound, and is also led to the outside via an output terminal 64.

All operations, including the above-described various receiving operations, of the digital TV broadcast receiving apparatus 100 are supervised by a control module 65. Incorporating a CPU (central processing unit) etc., the control module 65 receives operation information that is supplied from a operation module 16 or operation information that is transmitted from a remote controller 17 and received by a light-receiving module 18 and controls the individual modules in such a manner that the content of the operation is reflected.

In doing so, the control module 65 mainly uses a ROM (read-only memory) 66 which is stored with control programs to be run by the CPU, a RAM (random access memory) 67 which provides a work area for the CPU, and a nonvolatile memory 68 which is stored with various types of setting information and control information etc.

The control module 65 is connected, via a card I/F (interface) 69, to a card holder 70 in which a first memory card 19 can be inserted. The control module 65 can thus exchange, via the card I/F 69, information with the first memory card 19 inserted in the card holder 70.

The control module 65 is connected, via a card I/F (interface) 71, to a card holder 72 in which a second memory card 20 can be inserted. The control module 65 can thus exchange, via the card I/F 71, information with the second memory card 20 inserted in the card holder 72.

The control module 65 is connected to a LAN terminal 21 via a communication I/F 73. The control module 65 can thus exchange, via the communication I/F 73, information with a LAN-compatible device that is connected to the LAN terminal 21. In doing so, the control module 65, which has a DHCP (dynamic host configuration protocol) server function, controls the LAN-compatible device connected to the LAN terminal 21 by assigning it an IP (Internet protocol) address. An example of the LAN-compatible device is a NAS (network attached storage) 103.

The control module 65 is connected to a first HDMI terminal 22 via a first HDMI I/F 74. The control module 65 can thus exchange, via the first HDMI I/F 74, information with an HDMI-compatible device that is connected to the first HDMI terminal 22. The control module 65 is also connected to a second HDMI terminal 23 via a second HDMI I/F 75. The control module 65 can thus exchange, via the second HDMI I/F 75, information with an HDMI-compatible device that is connected to the second HDMI terminal 23.

The control module 65 is connected to a USB terminal 24 via a USB I/F 76. The control module 65 can thus exchange, via the USB I/F 76, information with a USB-compatible device that is connected to the USB terminal 24. An example of the USB-compatible device is a USB-HDD 102.

The control module 65 is also connected to an i-Link terminal 25 via an i-Link I/F 77. The control module 65 can thus exchange, via the i-Link I/F 77, information with an i-Link-compatible device that is connected to the i-Link terminal 25. An example of the i-Link-compatible device is an i-Link-HDD 104.

The control module 65 controls a recording operation by referring to each piece of recording schedule information included in a recording schedule list that is stored in the nonvolatile memory 68. Example recording destinations are a built-in HDD 101, the USB-HDD 102, the NAS 103, and the i-Link-HDD 104.

Each of the built-in HDD 101 and the USB-HDD 102 is capable of simultaneous recording of a maximum of n programs (in the embodiment, n = 2) because of the device nature, and is defined as a first program storage module. On the other hand, because of the device nature, each of the NAS 103 and the i-Link-HDD 104 is not capable of simultaneous recording of a maximum of n programs (is not capable of simultaneous recording itself), that is, can record only one program at a time. The NAS 103 and the i-Link-HDD 104 are defined as second program storage modules.

Therefore, to record programs P1 and P2 simultaneously, one of the following combinations, for example, should be selected as recording destinations of the programs P1 and P2:
1. Program P1 -> built-in HDD 101/program P2 -> built-in HDD 101
2. Program P1 -> built-in HDD 101/program P2 -> USB-HDD 102
3. Program P1 -> USB-HDD 102/program P2 -> USB-HDD 102

Next, a description will be made of an example recording schedule operation which is performed according to recording controls by the control module 65. More specifically, a description will be made of an example recording schedule operation which is performed using pieces of recording schedule information R1 and R2 that are registered in a recording schedule list. It is assumed that the recording schedule information R1 contains information to the effect that a terrestrial digital broadcast program P1 that is scheduled to be broadcast on channel 1 in the time slot of 9:00 to 10:00 should be recorded in the built-in HDD 101, and that the recording schedule information R2 contains information to the effect that a terrestrial digital broadcast program P2 that is scheduled to be broadcast on channel 3 in the time slot of 9:00 to 10:00 should be recorded in the built-in HDD 101.

In this case, according to a recording control by the control module 65, the tuner 54a tunes in to a terrestrial digital broadcast signal on channel 1 before 9:00 and continues to tune in to it at least until 10:00. According to a recording control by the control module 65, the tuner 54b tunes in to a terrestrial digital broadcast signal on channel 3 before 9:00 and continues to tune in to it at least until 10:00. As a result, the broadcast signals of programs P1 and P2 are input to the signal processing module 51 in the time slot of 9:00 to 10:00. According to recording controls by the control module 65, the signal processing module 51 starts a recording operation and supplies the broadcast signal of program P1 to the built-in HDD 101 in the time slot of 9:00 to 10:00 and the built-in HDD 101 records the broadcast signal of program P1 in the time slot of 9:00 to 10:00. Likewise, according to recording controls by the control module 65, the signal processing module 51 supplies the broadcast signal of program P2 to the built-in HDD 101 in the time slot of 9:00 to 10:00 and the built-in HDD 101 records the broadcast signal of program P2 in the time slot of 9:00 to 10:00.

As described above, both of programs P1 and P2 can be recorded correctly if the simultaneous recording enabling condition is satisfied. On the other hand, if the simultaneous recording enabling condition is not satisfied, recording-intended programs cannot be recorded. In such a case, it is necessary to cancel one or plural pieces of recording schedule information.

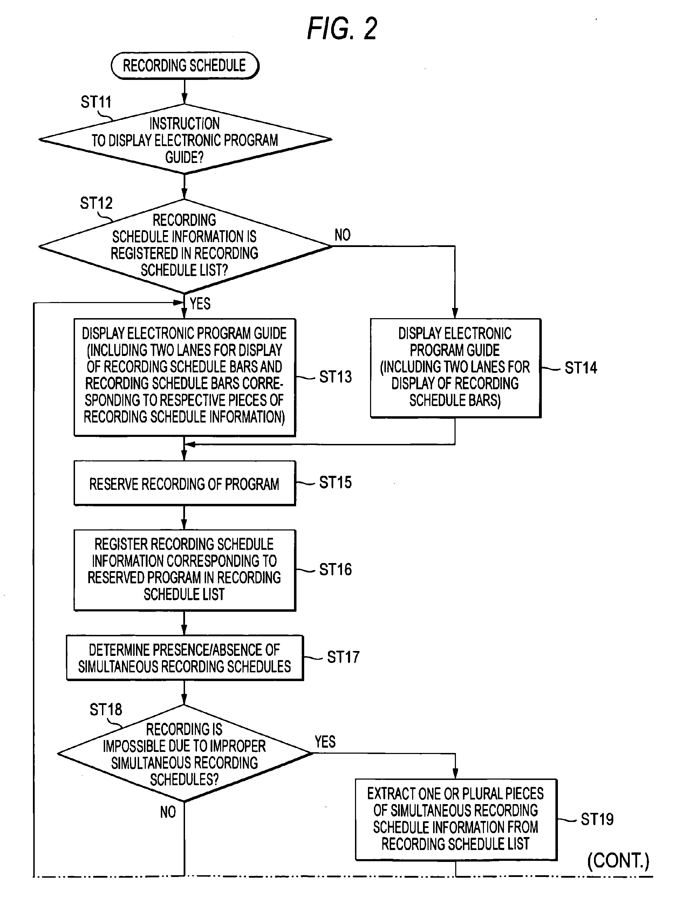

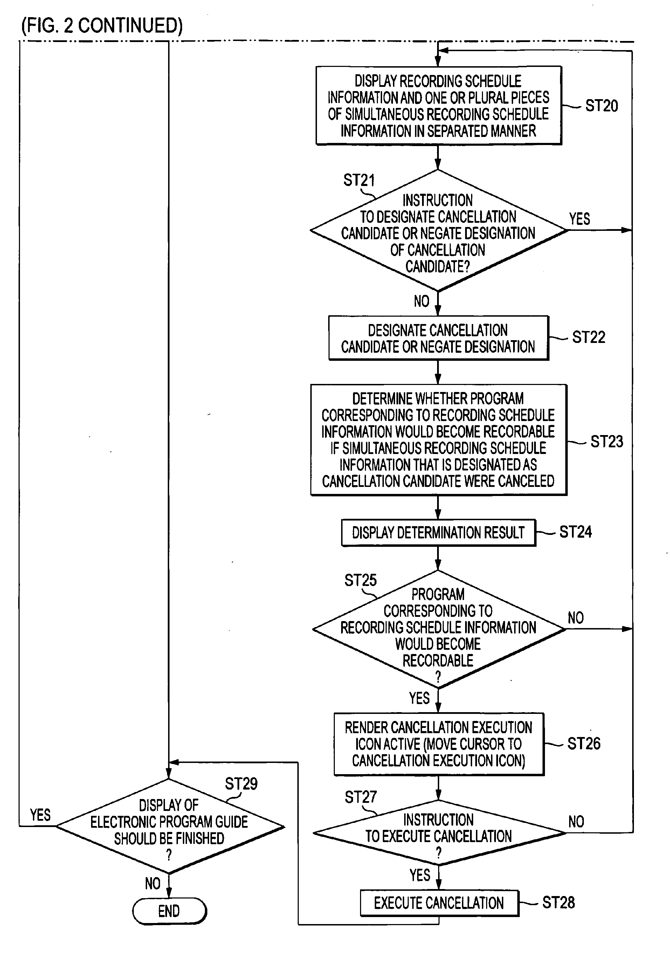

Next, a recording schedule process including cancellation of recording schedule information will be described with reference to a flowchart of Fig. 2.

The user who is attempting to make a recording schedule presses, for example, a program guide key that is provided on the remote controller 17 (ST11: yes). In response, at step ST13 or ST14, the video processing module 62 outputs display information for display of a program guide and the video display unit 14 displays the program guide.

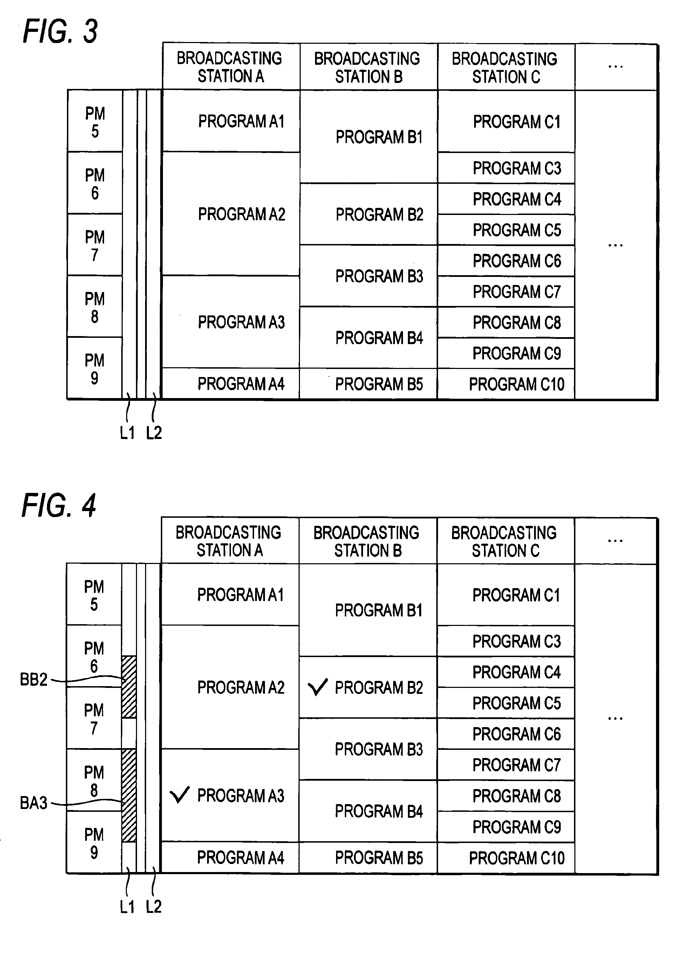

For example, if no recording schedule information is registered in a recording schedule list (ST12: no), as shown in Fig. 3 the program guide includes two lanes (empty lanes) L1 and L2 for display of recording schedule bars. Since the digital TV broadcast receiving apparatus 100 of the embodiment can record two programs simultaneously, the number of lanes is two. In the case of a digital TV broadcast receiving apparatus which can record three programs simultaneously, the number of lanes is three.

Since as shown in Fig. 3 the program guide includes the empty lanes L1 and L2, the user can easily recognize the premise that two programs can be recorded simultaneously and the fact that he or she can reserve recording of two programs in the same time slot from now. Since a boundary line exists between the two lines L1 and L2, the user can recognize more clearly that two programs can be recorded simultaneously in each time slot.

If the user presses a cursor movement key (four-way key) that is provided on the remote controller 17 in a state that the program guide is displayed on the video display unit 14, the cursor is moved in the program guide. For example, if the user presses an enter key that is provided on the remote controller 17 in a state that program B2, for example, is selected by the cursor, a screen for choosing between a viewing reservation or a recording schedule of program B2 is displayed. If the user chooses the recording schedule, selects the built-in HDD 101 as a recording device, and finalizes the choices using the remote controller 17 (step ST15), at step ST16 the control module 65 registers recording schedule information RB2 of program B2 in the recording schedule list.

At step ST17, the control module 65 determines presence/absence of simultaneous recording schedules by referring to the recording schedule list. At this step, presence/absence of simultaneous recording schedules that violate the simultaneous recording enabling condition is determined. An example of simultaneous recording schedules that violate the simultaneous recording enabling condition will be described later. If there are no simultaneous recording schedules that violate the simultaneous recording enabling condition, that is, there are no unrecordable simultaneous recording schedules (ST18: no), and the program guide key on the remote control unit 17 has not been pressed again (or an end key on the remote control unit 17 has not been pressed) (ST29: no), the process returns to step ST13 (an electronic program guide is displayed).

If the user again selects a recording schedule of a program (e.g., program A3), selects the built-in HDD 101 as a recording device, and finalizes the choices using the cursor movement key and the enter key provided on the remote controller 17 in a state that the program guide is displayed on the video display unit 14 (step ST15), at step ST16 the control module 65 registers recording schedule information RA3 of program A3 in the recording schedule list. Also in this case, presence/absence of simultaneous recording schedules is determined at step ST17 and it is determined that there are no unrecordable simultaneous recording schedules (ST18: no). The video processing module 62 outputs display information for display of a program guide and the video display unit 14 displays, for example, a program guide as shown in Fig. 4 (step S13).

As shown in Fig. 4, the program guide includes lanes L1 and L2 and the lane L1 includes recording schedule bars BB2 and BA3. This allows the user to easily recognize the premise that two programs can be recorded simultaneously and the facts that recording of one program can be reserved additionally in the time slot of each of programs B2 and A3 and recording of two programs can be reserved in the time slots other than the time slots of programs B2 and A3. Recording checkmarks indicating that recording has been reserved are displayed in those spaces of the program guide which correspond to the respective programs B2 and A3.

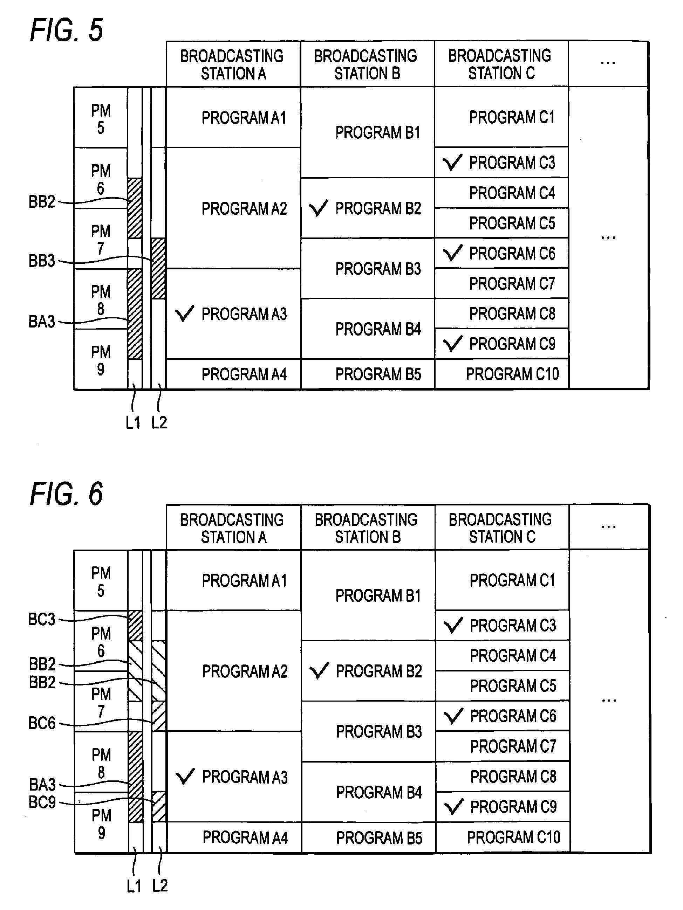

If the user again selects a recording schedule of a program (e.g., program B3), selects the built-in HDD 101 as a recording device, and finalizes the choices using the cursor movement key and the enter key provided on the remote controller 17 in a state that the program guide is displayed on the video display unit 14 (step ST15), at step ST16 the control module 65 registers recording schedule information RB3 of program B3 in the recording schedule list. Also in this case, presence/absence of simultaneous recording schedules is determined at step ST17 and it is determined that there are no unrecordable simultaneous recording schedules (ST18: no). The video processing module 62 outputs display information for display of a program guide and the video display unit 14 displays, for example, a program guide as shown in Fig. 5 (step S13).

As shown in Fig. 5, the program guide includes lanes L1 and L2. The lane L1 includes the recording schedule bars BB2 and BA3 and the lane L2 includes a recording schedule bar BB3. This allows the user to easily recognize the premise that two programs can be recorded simultaneously and the facts that no further recording can be reserved in the overlap time slot of programs A3 and B3 and recording of one or two programs can be reserved in the time slots other than the overlap time slot of programs A3 and B3. Recording checkmarks indicating that recording has been reserved are displayed in those spaces of the program guide which correspond to the respective programs B2, A3, and B3.

Figs. 6, 7, and 8 show an example manner of display of a program guide in a situation that recording schedule information RC3 to the effect that program C3 should be recorded in the built-in HDD 101, recording schedule information RB2 to the effect that program B2 should be recorded in the NAS 103, recording schedule information RC6 to the effect that program C6 should be recorded in the USB-HDD 102, recording schedule information RA3 to the effect that program A3 should be recorded in the built-in HDD 101, and recording schedule information RC9 to the effect that program C9 should be recorded in the USB-HDD 102 are set.

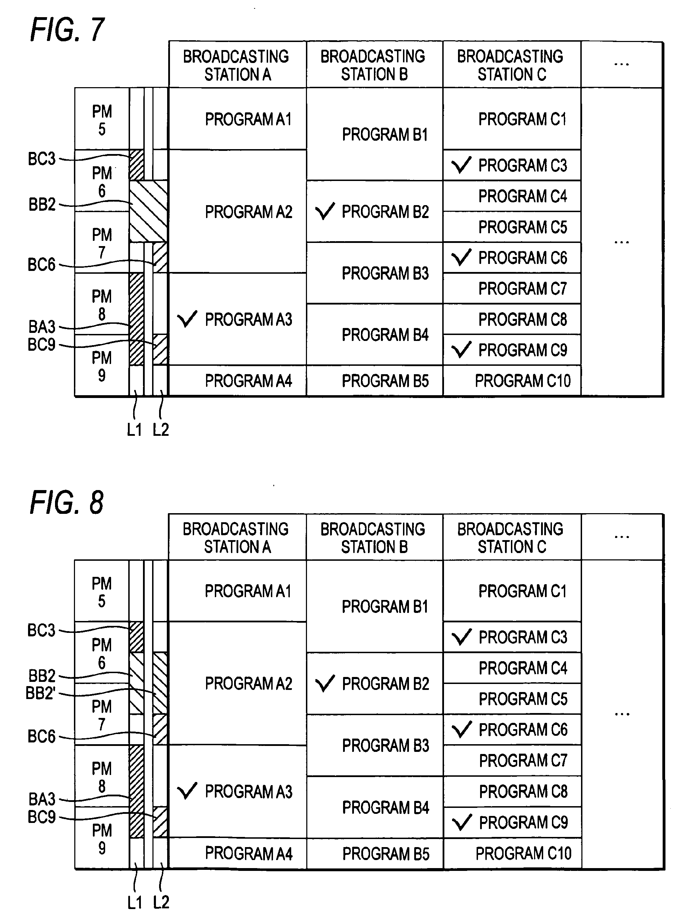

The NAS 103 is not capable of simultaneous recording of two programs. Therefore, as shown in Fig. 6, recording schedule bars BB2 are displayed in both lanes L1 and L2 for the setting of the recording schedule information RB2. Alternatively, as shown in Fig. 7, one recording schedule bar BB2 may be displayed so as to bridge the lanes L1 and L2 (i.e., their boundary line is erased). A further alternative display is possible in which as shown in Fig. 8 a recording schedule bar BB2 is displayed in the lane L1 and a toned-down recording schedule bar BB2' is displayed in the lane L2. Any of these displays allows the user to easily recognize that because of the setting of the recording schedule information RB2 no further recording schedule can be made in this time slot. Recording checkmarks indicating that recording has been reserved are displayed in those spaces of each of the program guides of Figs. 6-8 which correspond to the respective programs A3, B2, C3, C6, and C9.

As shown in Fig. 6, recording schedule bars may be displayed in different colors. For example, the recording schedule bars BC3 and BA3 corresponding to the pieces of recording schedule information RC3 and RA3 each of which includes the information to the effect that the recording destination is the built-in HDD 101 are displayed in red. The recording schedule bar BB2 corresponding to the recording schedule information RB2 that includes the information to the effect that the recording destination is the NAS 103 is displayed in blue. The recording schedule bars BC6 and BC9 corresponding to the pieces of recording schedule information RC6 and RC9 each of which includes the information to the effect that the recording destination is the USB-HDD 102 are displayed in green. This allows the user to recognize the different recording destinations at a glance.

Next, a description will be made of a process that is executed when there exist simultaneous recording schedules that violate the simultaneous recording enabling condition, that is, there exist unrecordable simultaneous recording schedules.

Assume that the control module 65 has registered recording schedule information RP1 of program P1 in a recording schedule list (step ST16). Also assume that program P1 is, for example, a terrestrial digital broadcast program that is scheduled to be broadcast on channel 4 in the time slot of 9:00 to 11:00, and that the recording schedule information RP1 includes information to the effect that program P1 should be recorded in the built-in HDD 101 (first program storage module). At step ST17, by referring to the recording schedule list, the control module 65 determines whether registration of the recording schedule information RP1 causes violation of the simultaneous recording enabling condition. If the registration of the recording schedule information RP1 causes violation of the simultaneous recording enabling condition, that is, it is impossible to record program P1 (ST18: yes), at step ST19 the control module 65 extracts one or plural pieces of simultaneous recording schedule information.

Assume that, for example, pieces of simultaneous recording schedule information RP2, RP3, RP4, and RP5 of programs P2, P3, P4, and P5 have been extracted. Also assume that program P2 is a satellite digital broadcast program that is scheduled to be broadcast on channel 5 in the time slot of 9:00 to 10:00, that program P3 is a terrestrial digital broadcast program that is scheduled to be broadcast on channel 6 in the time slot of 9:00 to 10:00, that program P4 is a satellite digital broadcast program that is scheduled to be broadcast on channel 5 in the time slot of 10:00 to 11:00, and that program P5 is a terrestrial digital broadcast program that is scheduled to be broadcast on channel 6 in the time slot of 10:00 to 11:00. Further assume that the recording schedule information RP2 includes information to the effect that program P2 should be recorded in the USB-HDD 102 (first program storage module), that the recording schedule information RP3 includes information to the effect that program P3 should be recorded in the built-in HDD 101 (first program storage module), that the recording schedule information RP4 includes information to the effect that program P4 should be recorded in the USB-HDD 102 (first program storage module), and that the recording schedule information RP5 includes information to the effect that program P5 should be recorded in the built-in HDD 101 (first program storage module).

That is, the request for registration of the recording schedule information RP1 means a request for simultaneous recording of three programs and hence violates the simultaneous recording enabling condition (a maximum of two programs can be recorded simultaneously).

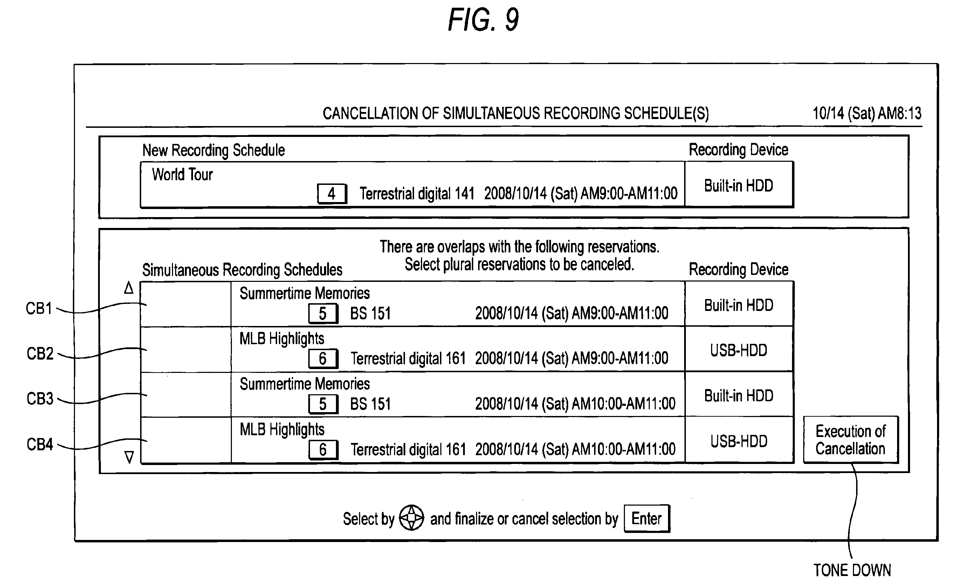

At step ST20, the video processing module 62 outputs display information for displaying the recording schedule information RP1 and the pieces of simultaneous recording schedule information in a separated manner and the video display unit 14 displays the recording schedule information RP1 and the pieces of simultaneous recording schedule information in a separated manner as shown in Fig. 9.

If the user presses the cursor movement key on the remote controller 17 in a state that the simultaneous recording schedule cancellation screen of Fig. 9 is displayed, the cursor is moved in the screen. For example, if the user presses the enter key on the remote controller 17 in a state that a simultaneous recording schedule cancellation check box CB1 is selected by the cursor (ST21: yes), at step ST22 the control module 65 puts a cancellation checkmark into the simultaneous recording schedule cancellation check box CB1 and thereby designates the simultaneous recording schedule information RP2 as a cancellation candidate. If the user again presses the enter key in a state that the simultaneous recording schedule cancellation check box CB1 is selected by the cursor (ST21: yes), at step ST22 the control module 65 removes the cancellation checkmark from the simultaneous recording schedule cancellation check box CB1 and thereby negates the cancellation candidacy of the simultaneous recording schedule information RP2.

A cancellation checkmark can also be put into or removed from each of the other simultaneous recording schedule cancellation check boxes CB2, CB3, and CB4 by similar operations.

Every time a cancellation candidate is designated, at step ST23 the control module 65 determines whether program P1 which corresponds to the simultaneous recording schedule information RP1 would become recordable if the simultaneous recording schedule information that is designated as the cancellation candidate were cancelled. Likewise, every time cancellation candidacy is negated, at step ST23 the control module 65 determines whether program P1 which corresponds to the simultaneous recording schedule information RP1 would become recordable. Until program P1 becomes recordable, a cancellation execution icon in the screen of Fig. 9 is kept toned down (inactive) and cannot be selected. Every time a determination is made at step ST23, at step ST24 the video processing module 62 outputs display information for display of a determination result and the video display unit 14 displays the determination result. In this manner, when the simultaneous recording enabling condition is violated by addition of a new recording schedule (i.e., when the maximum allowable number of simultaneous recording schedules is exceeded), the user can simulate cancellation of a reservation(s) and hence can cause execution of a desired canceling operation.

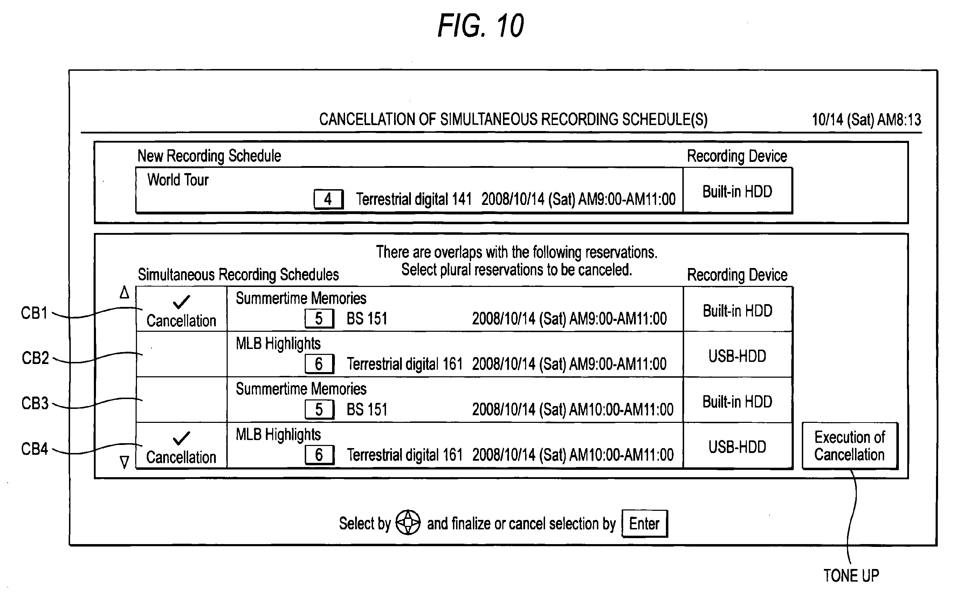

Fig. 10 shows an example manner of display of a case that the simultaneous recording enabling condition would be satisfied and program P1 would become recordable if simultaneous recording schedules that are designated as cancellation candidates were canceled. If it is determined that program P1 would become recordable (ST25: yes) and the screen of Fig. 10 is displayed, at step ST26 the cancellation execution icon in the screen of Fig. 10 is toned up (made active), that is, it is rendered selectable. At step ST26, the cursor may be moved automatically to the cancellation execution icon. If the user gives an instruction to execute the cancellation using the enter key on the remote controller 17 (ST27: yes), at step ST28 the control module 65 executes the cancellation of the pieces of simultaneous recording schedule information that are designated as the cancellation candidates.

As a result, the simultaneous recording enabling condition is satisfied and program P1 corresponding to the recording schedule information RP1 becomes recordable.

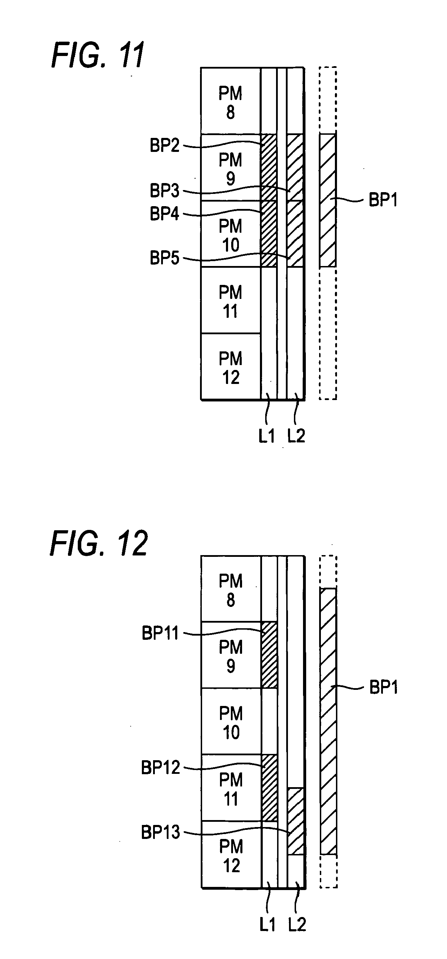

Fig. 11 shows a relationship between a recording schedule bar BP1 corresponding to the recording program P1 and recording schedule bars BP2, BP3, BP4, and BP5 corresponding to the simultaneous recording programs P2, P3, P4, and P5. It is seen that if it is attempted to set the recording schedule bar BP1 in a state that the recording schedule bars BP2, BP3, BP4, and BP5 are already set, the simultaneous recording enabling condition will be violated.

Next, how to give guidance to determine a minimum number of cancellation candidates for enabling recording of program P1 will be described with reference to Figs. 12-14.

Fig. 12 shows a case that the simultaneous recording enabling condition (a maximum of two programs can be recorded simultaneously) is violated when it is attempted to set a recording schedule bar BP1 in a state that recording schedule bars BP11, BP12, and BP13 are already set. In this case, the simultaneous recording enabling condition is not satisfied even if recording schedule information RP11 corresponding to the recording schedule bar BP11 is canceled. In this case, the simultaneous recording enabling condition is satisfied by canceling a minimum number of cancellation candidates if recording schedule information RP12 corresponding to the recording schedule bar BP12 or recording schedule information RP13 corresponding to the recording schedule bar BP13 is canceled.

Therefore, the control module 65 extracts the recording schedule information RP12 corresponding to the recording schedule bar BP12 or the recording schedule information RP13 corresponding to the recording schedule bar BP13 (a minimum number of cancellation candidates) and recommends cancellation of the recording schedule information RP12 or RP13. For example, the video processing module 62 outputs display information for display of cancellation recommendation icons for the pieces of recording schedule information RP12 and RP13, whereby the cancellation recommendation icons are displayed for the pieces of recording schedule information RP12 and RP13 in a screen in which the pieces of recording schedule information RP11, RP12, and RP13 corresponding to the recording schedule bars BP11, BP12, and BP13 are displayed. That is, in the displayed screen, the recording schedule information RP12 or RP 13 which constitutes a minimum number of cancellation candidates is discriminated from the recording schedule information RP11 which does not constitute a minimum number of cancellation candidates.

If, for example, the recording schedule information RP 11 is selected as a cancellation candidate, the control module 65 again extracts a cancellation candidate for realizing a minimum number of cancellation candidates and the video processing module 62 updates the display information according to the re-extraction of the cancellation candidate. In the case being considered, cancellation recommendation icons are displayed for the pieces of recording schedule information RP12 and RP13. Alternatively, since the simultaneous recording enabling condition is satisfied if either of the pieces of recording schedule information RP12 and RP13 is canceled, no cancellation recommendation icon may be displayed for any of the pieces of recording schedule information RP12 and RP 13.

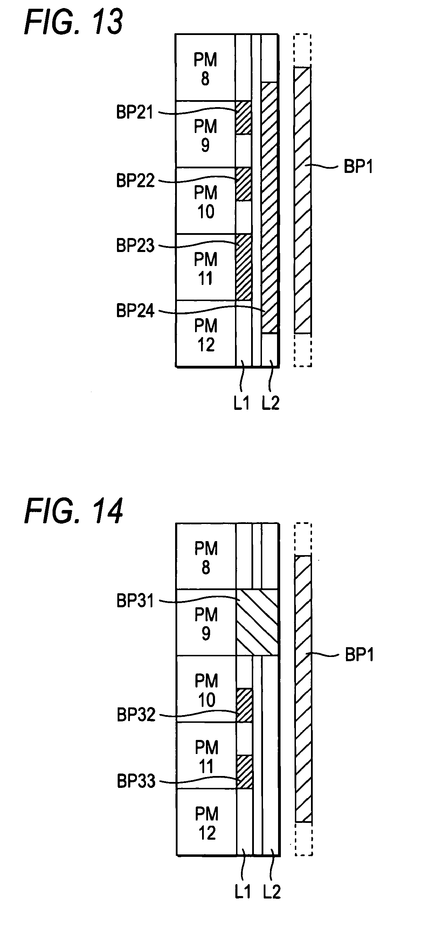

Fig. 13 shows a case that the simultaneous recording enabling condition (a maximum of two programs can be recorded simultaneously) is violated when it is attempted to set a recording schedule bar BP1 in a state that recording schedule bars BP21, BP22, and BP23, and BP24 are already set. In this case, cancellation of recording schedule information RP24 corresponding to the recording schedule bar BP24 is recommended. For example, the video processing module 62 outputs display information for display of a cancellation recommendation icon for the recording schedule information RP24, whereby the cancellation recommendation icon is displayed for the recording schedule information RP24 in a screen in which the pieces of recording schedule information RP21, RP22, RP23, and RP24 corresponding to the recording schedule bars BP21, BP22, BP23, and BP24 are displayed. That is, in the displayed screen, the recording schedule information RP24 which constitutes a minimum number of cancellation candidates is discriminated from the pieces of recording schedule information RP21, RP22, and RP23 which do not constitute a minimum number of cancellation candidates.

If, for example, the recording schedule information RP21 for which no cancellation recommendation icon is displayed is selected as a cancellation candidate, the control module 65 again extracts a cancellation candidate for realizing a minimum number of cancellation candidates and the video processing module 62 updates the display information according to the re-extraction of the cancellation candidate. In the case being considered, a cancellation recommendation icon is displayed again for the recording schedule information RP24.

Fig. 14 shows a case that the simultaneous recording enabling condition (a maximum of two programs can be recorded simultaneously) is violated when it is attempted to set a recording schedule bar BP1 in a state that recording schedule bars BP31, BP32, and BP33 are already set. In this case, simultaneous recording of two programs can be reserved in the time slots other than the time slots of PM 9:00 to PM 10:00, PM 10:00 to PM 11:00, and PM 11:00 to AM 0:00 and recording of one program can be reserved additionally in each of the time slots of PM 10:00 to PM 11:00 and PM 11:00 to AM 0:00 in which the first program storage module is designated as a recording destination. However, recording of no program can be reserved in the time slot of PM 9:00 to PM 10:00 in which the second program storage module is designated as a recording destination. In this case, cancellation of recording schedule information RP31 corresponding to the recording schedule bar BP31 is recommended. For example, the video processing module 62 outputs display information for display of a cancellation recommendation icon for the recording schedule information RP31, whereby the cancellation recommendation icon is displayed for the recording schedule information RP31 in a screen in which the pieces of recording schedule information RP31, RP32, and RP33 corresponding to the recording schedule bars BP31, BP32, and BP33 are displayed. That is, in the displayed screen, the recording schedule information RP31 which constitutes a minimum number of cancellation candidates is discriminated from the pieces of recording schedule information RP32 and RP23 which do not constitute a minimum number of cancellation candidates.

If, for example, the recording schedule information RP32 for which no cancellation recommendation icon is displayed is selected as a cancellation candidate, the control module 65 again extracts a cancellation candidate for realizing a minimum number of cancellation candidates and the video processing module 62 updates the display information according to the re-extraction of the cancellation candidate. In the case being considered, a cancellation recommendation icon is displayed again for the recording schedule information RP31.

In the above-described manner, when the simultaneous recording enabling condition is violated by addition of a new recording schedule (i.e., when the maximum allowable number of simultaneous recording schedules is exceeded), the user can perform reservation canceling work efficiently.

According to pieces of recording schedule information that have been registered in a recording schedule list according to the recording schedule process of Fig. 2, the control module 65 causes the tuners 49a, 49b, 54a, 54b, and 56 to selectively tune in to signals transmitted from target broadcasting stations and records target programs in the built-in HDD 101, the USB-HDD 102, the NAS 103, and the i-Link-HDD 104.

The above-described modules may be realized by hardware or realized by software by using the CPU or the like.

As described above, there is provided a program recording apparatus and a recording schedule information display method capable of informing, in an easy-to-understand manner, the user whether a further recording schedule can be made in a recording environment in which a recording device that is capable of simultaneous recording and a recording device that is not capable of simultaneous recording can be used selectively.

Although the embodiments according to the present invention have been described above, the present invention is not limited to the above-mentioned embodiments but can be variously modified.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A program recording apparatus comprising:
a registering module configured to register, in a recording schedule list, at least one of first recording schedule information including first recording destination information indicating that a first program storage unit that is capable of simultaneous recording of plural programs is designated as a recording destination and second recording schedule information including second recording destination information indicating that a second program storage unit that is not capable of simultaneous recording of plural programs is designated as a recording destination;
a display information output module configured to output display information for displaying a first recording schedule state that an additional recording schedule can be set in a recording time slot of the first recording schedule information and a second recording schedule state that no additional recording schedule can be set in a recording time slot of the second recording schedule information;
a plurality of tuning module configured to tune in to signals transmitted from broadcasting stations; and
a recording module configured to record one or more programs based on one or plural programs selected by one or plural ones of the plural tuning module by referring to the recording schedule list.

2. The apparatus of Claim 1, wherein the display information output module is configured to output the first recording schedule state indicating that a recording schedule is already set and an additional recording schedule can be set in the recording time slot of the first recording schedule information, and
wherein the display information output module is configured to output the second recording schedule state indicating that a recording schedule is already set and no additional recording schedule can be set in the recording time slot of the second recording schedule information.

3. The apparatus of Claim 2, wherein the display information output module is configured to output the display information for displaying a program guide in which the first and second recording schedule states are correlated with program guide information.

4. The apparatus of Claim 3, wherein the display information output module is configured to output the display information for displaying a plurality of lanes for displaying a plurality of, recording schedule bars, which display the first recording schedule state in such a manner that one recording schedule bar corresponding to the first recording schedule information is set in one lane in the recording time slot of the first recording schedule information, and for displaying the second recording schedule state in such a manner that a plurality of recording schedule bars corresponding to the second recording schedule information are set in the lanes in the recording time slot of the second recording schedule information.

5. The apparatus of Claim 4, wherein the display information output module outputs, according to a manner of overlap between pieces of first recording schedule information, the display information for displaying the plural first recording schedule states in such a manner that plural recording schedule bars corresponding to the respective pieces of first recording schedule information are set in plural lanes in recording time slots of the pieces of first recording schedule information, respectively.

6. A method for displaying recording schedule information, the method comprising:
registering, in a recording schedule list, at least one of first recording schedule information including first recording destination information indicating that a first program storage unit that is capable of simultaneous recording of plural programs is designated as a recording destination and second recording schedule information including second recording destination information indicating that a second program storage unit that is not capable of simultaneous recording of plural programs is designated as a recording destination; and
outputting display information for display of a first recording schedule state that an additional recording schedule can be set in a recording time slot of the first recording schedule information and a second recording schedule state that no additional recording schedule can be set in a recording time slot of the second recording schedule information.
